# EUROPEAN PATENT APPLICATION

(11) **EP 0 576 776 A2**
(43) Date of publication of application: **05.01.1994**
(21) Application number: 92830657.0
(22) Date of filing: 04.12.1992
(51) Int. Cl.: B60Q 1/44

(54) **Security lights for road users to be placed on vehicles**

(30) Priority: 08.06.1992 IT SA920013
(71) Applicant: Mascolo, Eliodoro, I-84018 Scafati (SA) (IT)
(72) Inventor: Mascolo, Eliodoro, I-84018 Scafati (SA) (IT)

(57) **Abstract**

The invention inhere described in details, has the aim to make all users of the road sure that the vehicle which is coming across from them or laterally has really stopped. This assurance derives from seeing green colored lights, located on the side and in front of the vehicle, that are turned on nearly simutaneous when appling the brake and the clutch (pedal or lever).

## Description

### SUMMERY OF THE INVENTION

The invention inhere described in details, has the aim to make all users of the road sure that the vehicle which is coming across from them or laterally has really stopped. This assurance derives from seeing green colored lights, located on the side and in front of the vehicle, that are turned on nearly simutaneous when appling the brake and the clutch (pedal or lever)

### DESCRIPTION OF THE INVENTION

Description of the industrial invention which has the title of:"Security lights for the users of the road, which must be put on the vehicles" by Mr. Mascolo Eliodoro, residing in Scafati (Sa - Italy) in via S.Maria la Carità n. 93. The issue of this invention is to introduce a considerable advance in the luminous signals of the vehicles (motorbycles, lorries, vans, cars, buses articulated lorries and all the others types of motor vehicles). Nowdays, the vehicles are generally supply with: 1) in the preceding side of a) two sidelights (white or yellow light): its function is to restore the vehicle visible; b) two headlights (white or yellow light), they have the functions to floodlight the road to great distance; C) two dipped headlights to predispose to floodlight the road, sparing the blunder of the vehicles coming from opposite direction. 2) In the back side there are a) two red sidelights; b) two red stopping lights (stop); c) two orange indicator-lights. In the same sides of the indicator lights, wheter in the preceding side that in the back side, the "emergency" lights are by now installed "standard", and they are set going by the vehicle's driver only in particular cases. Thus today for the person that is looking at the back of the preceding vehicle is possible to know (by ignition of red stopping lights) if the vehicle is going to stop or it has stopped, so that is possible to make the decision of the case however nothing is possible to know about the stop of the vehicle that is coming toward you. For example a pedestrian that is ready to cross the road or the driver approaching to a cross-road can never be sure that the vehicle coming in front of him or by a lateral side has stopped or not. So the innovation has the purpose to give the certainty to all road users that the vehicle coming in front or by a lateral side has stopped.

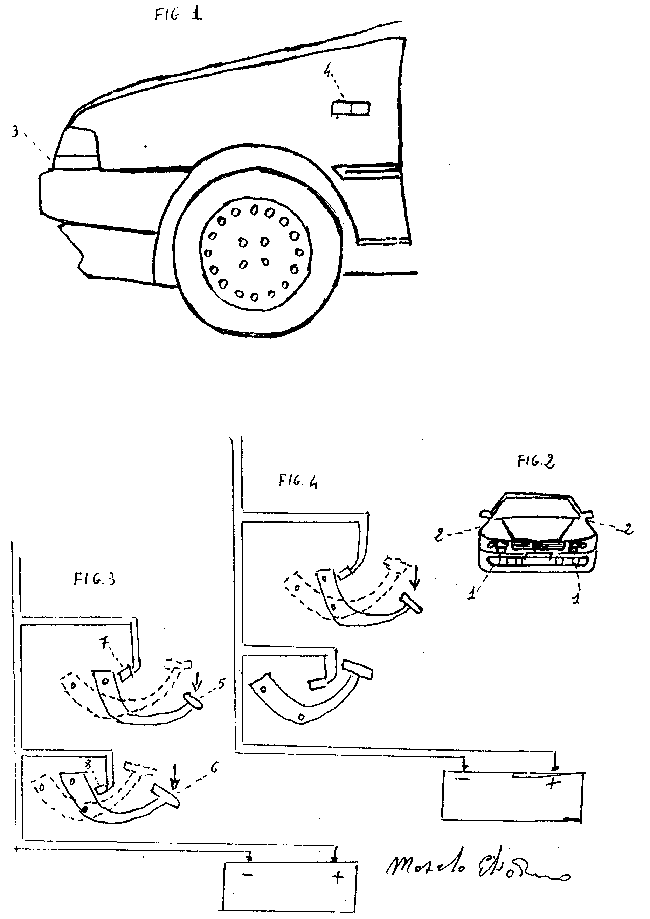

The main peculiarity of the invention is the collocation of green security lights, either A) on lights anterior set of the vehicle "1" putting them towards the middle of the the masked soon afterwards the direction indicators and the side lights, and on predisposed housings for the side lights "2" (fig.2) -or B) on other models and kinds of vehicles which have the side anterior lights (putting them) in the same space of the side lights which will be extended or, however, divided "3" (fig. 1), and in the predisposed housing for the side lights "4". This "Security lights for the users of the road" light up when the driver of the vehicle apply (fig.3) first the brake "5" then the clutch "6" (or vice versa), such thing happen generally when he is going to stop a vehicle. In fact, the appling nearly simultaneous of the brake and the clutch, connected between theirselves by two sensors "7-8", cause the lighting of the security green lights. The device, however, does not work when the driver apply only the brake or only the clucth (pedal or lever) (fig.4).

## Claims

1. Security green lights to put, either, A) on lights anterior set of the vehicle putting them towards the middle of the masked soon afterwards the direction indicators and side lights, and on predisposed housing for the side lights - or B) on other models and kinds of vehicles which have the side anterior lights (putting them) in the same space of the side lights which will be exetended or, however, divided and in the predisposed housings for the side lights. The device function by two sensors, which connected with the brake and the clutch applied nearly simultaneous, cause the lighting of the green lights informing the users of the road the vehicle which comes in front of them or laterally is completely stopped.
